# EUROPÄISCHE PATENTSCHRIFT

(11) **EP 1 848 534 B1**
(45) Veröffentlichungstag und Bekanntmachung des Hinweises auf die Patenterteilung: **23.07.2008**
(21) Anmeldenummer: 06707041.7
(22) Anmeldetag: 17.02.2006
(51) Int. Cl.: B01J 35/04, F01N 3/022

(54) **WABENKÖRPER MIT INTERNEN KAVERNEN**
HONEYCOMB WITH INTERNAL CAVITIES
CORPS EN NID D'ABEILLES A CAVITES INTERNES

(30) Priorität: 18.02.2005 DE 102005007403
(43) Veröffentlichungstag der Anmeldung: 31.10.2007
(73) Patentinhaber: Emitec Gesellschaft für Emissionstechnologie mbH, 53797 Lohmar (DE)
(72) Erfinder: MAUS, Wolfgang, 51429 Bergisch Gladbach (DE); BRÜCK, Rolf, 51429 Bergisch Gladbach (DE); HIRTH, Peter, 53127 Bonn (DE)
(74) Vertreter: Rössler, Matthias
(86) Internationale Anmeldenummer: PCT/EP2006/001449
(87) Internationale Veröffentlichungsnummer: WO 2006/087207

(56) Entgegenhaltungen:
- EP-A- 0 587 074
- US-A- 5 567 395
- PATENT ABSTRACTS OF JAPAN Bd. 013, Nr. 485 (M-887), 6. November 1989 (1989-11-06) & JP 01 193013 A (MAZDA MOTOR CORP), 3. August 1989 (1989-08-03)

## Beschreibung

Die vorliegende Erfindung betrifft einen Wabenkörper, insbesondere für die Reinigung von Abgas eines Verbrennungsmotors. Solche Wabenkörper können metallische oder keramische Grundstrukturen haben und dienen zur Bereitstellung einer großen, mit einem Abgas wechselwirkenden Oberfläche in einem Abgassystem. Insbesondere werden Wabenkörper mit katalytisch aktivem Material beschichtet und/oder so ausgebildet, dass sie feine Partikel aus dem Abgas abscheiden und umsetzen können. Weiterhin werden solche Wabenkörper auch mit Adsorbermaterial besichtet, welche zum zeitweisen Adsorbieren von Schadstoffen, insbesondere Kohlenwasserstoffen und/oder Stickoxyden dienen.

Typischerweise haben solche Wabenkörper eine Vielzahl von etwa parallel verlaufenden Kanälen, die von einer Eintrittsfläche des Wabenkörpers zu einer Austrittsfläche führen. Im eingebauten Zustand wird daher ein solcher Wabenkörper in einer Strömungsrichtung mehr oder weniger gleichmäßig von Abgas durchströmt, wobei die Verteilung des Abgases auf die einzelnen Kanäle des Wabenkörpers zunächst hauptsächlich vom Strömungsprofil an der Eintrittsfläche abhängt. Im Stand der Technik sind auch zahlreiche Maßnahmen bekannt, die die Strömung in den einzelnen Kanäle und/oder die Strömungsverteilung im Wabenkörper beeinflussen. Hochentwickelte metallische Wabenkörper, die aus einzelnen Blechlagen aufgebaut sind, wenden oftmals mehrere verschiedene der bekannten Maßnahmen zur Optimierung der Strömungseigenschaften eines Wabenkörpers an. Man unterscheidet vor allem zwei typische Bauformen für metallische Wabenkörper. Eine frühe Bauform, für die die DE 29 02 779 A1 typische Beispiele zeigt, ist die spiralige Bauform, bei der im wesentlichen eine glatte und eine gewellte Blechlage aufeinandergelegt und spiralförmig aufgewickelt werden. Bei einer anderen Bauform wird der Wabenkörper aus einer Vielzahl von abwechselnd angeordneten glatten und gewellten oder unterschiedlich gewellten Blechlagen aufgebaut, wobei die Blechlagen zunächst einen oder mehrere Stapel bilden, die miteinander verschlungen werden. Dabei kommen die Enden aller Blechlagen außen zu liegen und können mit einem Gehäuse oder Mantelrohr verbunden werden, wodurch zahlreiche Verbindungen entstehen, die die Haltbarkeit des Wabenkörpers erhöhen. Typische Beispiele dieser Bauformen sind in der EP 0 245 737 B1 oder der WO 90/03220 beschrieben. Auch seit langem bekannt ist es, die Blechlagen mit zusätzlichen Strukturen auszustatten, um die Strömung zu beeinflussen und/oder eine Quervermischung zwischen den einzelnen Strömungskanälen zu erreichen. Typische Beispiele für solche Ausgestaltungen sind die WO 91/01178, die WO 91/01807 und die WO 90/08249. Schließlich gibt es auch Wabenkörper in konischer Bauform, gegebenenfalls auch mit weiteren zusätzlichen Strukturen zur Strömungsbeeinflussung. Ein solcher Wabenkörper ist beispielsweise in der WO 97/49905 beschrieben.

Die vorliegende Erfindung geht von der WO 2004/022937 A1 aus. Aus dieser Schrift ist es bekannt, Wabenkörper aus gelochten Blechlagen herzustellen, wobei die Löcher in den Blechlagen größer als der Querschnitt der Kanäle sein können. Wabenkörper aus solchen gelochten Blechlagen haben besonders günstige Eigenschaften in Bezug auf die Verteilung der Strömung in ihrem Inneren, da Druckunterschiede in den einzelnen Kanälen sich durch die Löcher ausgleichen und gleichzeitig eine Verwirbelung des hindurchströmenden Gases stattfindet, was die Kontaktierung mit den Oberflächen verbessert. Zahl und Lage der Löcher sind in weiten Grenzen variabel, so dass an unterschiedliche Bedingungen angepasste Wabenkörper herstellbar sind.

In der WO 2004/022937 A1 wird außerdem beschrieben, wie man durch geeignete Aussparungen in den einzelnen Blechlagen bei der Herstellung einen großen Hohlraum, zum Beispiel zur Aufnahme einer Lambdasonde, in einem Wabenkörper erzeugen kann. Moderne Fertigungstechniken lassen es zu, genau vorherzubestimmen, an welcher Stelle in einem herzustellenden Wabenkörper ein Hohlraum entstehen soll. Bezüglich weiterer Einzelheiten wird auf die WO 2004/022937 A1 verwiesen, deren Offenbarung vollinhaltlich übernommen wird.

Auch in der EP 1 428 577 A1 wird ein Wabenkörper mit Löchern in seinen Blechlagen beschreiben. Dieser Wabenkörper ist aus einem glatten und einem gewellten Blech spiralförmig gewickelt. Bei allen Herstellungsverfahren für Wabenkörper aus metallischen Blechlagen mit Löchern kann es natürlich vorkommen, dass einige Löcher in aufeinander folgenden Blechlagen ungefähr miteinander fluchten. Auf diese Weise entstehen mehr oder weniger zufällig in einem Wabenkörper größere Hohlräume, im folgenden Kavernen genannt. Ohne besondere Maßnahmen, insbesondere bei gleichmäßiger Anordnung der Löcher auf den Blechlagen sind diese Kavernen sehr unregelmäßig geformt und insbesondere im äußeren Bereich eines Wabenkörpers meist stark gekrümmt oder sogar unterbrochen, was vom Verhältnis der Folienfläche zur Fläche der Löcher abhängt.

Es hat sich nun herausgestellt, dass es für verschiedene Anwendungen, insbesondere zur Beseitigung von Partikeln aus einem Abgas, besonders vorteilhaft ist, wenn in einem Wabenkörper eine größere Zahl von Kavernen ausgebildet ist, die relativ große Dimensionen in allen Richtungen haben. Die Schwierigkeit bei der Beschreibung der Eigenschaften solcher Kavernen besteht darin, dass diese Kavernen nicht von geschlossenen Wänden umgeben sind, sondern eben durch mehr oder weniger miteinander fluchtende Löcher in glatten und gewellten Blechlagen definiert werden. Die Ränder dieser Löcher bilden eine Art Einhüllende für die Kaverne. Ein Weg zur Beschreibung solcher Kavernen, die für die Eigenschaften eines Wabenkörpers vorteilhaft sind, ist es anzugeben, eine wie große Kugel in einer Kaverne Platz finden würde. Im folgenden und anhand der Zeichnung wird daher unter anderem versucht, die Eigenschaften von Kavernen anhand der größten in einer Kaverne unterbringbaren Kugel zu beschreiben. Es ist sofort einleuchtend, dass keine Kaverne in einem Wabenkörper größere Kugeln aufnehmen kann als durch die Löcher in den Folien passen würden. Einerseits wird also die Größe der in eine Kaverne passenden Kugel durch die Größe der Löcher bestimmt, andererseits durch den Grad der Überlappung benachbarter Löcher.

Es sei auch noch darauf hingewiesen, dass bei der Betrachtung von Löchern in einer gewellten Folie für die vorliegende Erfindung immer nur die Projektion der Löcher auf die Mittelebene einer gewellten Folie betrachtet wird. Für die vorliegende Erfindung und die Bildung von Kavernen spielt die Art der Wellung keine entscheidende Rolle, sondern nur die Größe der Projektion der Löcher in einer gewellten Blechlage. Die Wellung spielt allerdings eine Rolle für die Größe der Kanäle in einem Wabenkörper. Bei einfach aufgebauten Wabenkörpern haben alle Kanäle etwa die gleiche Querschnittsfläche, jedoch gibt es auch Wabenkörper, bei denen in einem bestimmten Querschnittsbereich unterschiedliche Kanalquerschnittsflächen vorkommen. Zur Verallgemeinerung wird im folgenden daher von der durchschnittlichen Kanalquerschnittsfläche gesprochen, was im einfachsten Fall eben die Querschnittsfläche jedes Kanals bedeutet, in komplizierteren Fällen jedoch für einen bestimmten Querschnittsbereich eines Wabenkörpers die Gesamtquerschnittsfläche des Wabenkörpers geteilt durch die Zahl der Kanäle in diesem Querschnittsbereich.

Der vorliegenden Erfindung liegt die Aufgabe zugrunde, einen Wabenkörper anzugeben, der verbesserte Eigenschaften in Bezug auf Strömungsverhältnisse, Druckverlust, Umsetzung von Schadstoffen und/oder Partikel in einem Abgas aufweist.

Zur Lösung dieser Aufgabe dient ein Wabenkörper nach dem unabhängigen Anspruch 1 bzw. nach dem unabhängigen Anspruch 8. Vorteilhafte Ausgestaltungen und Weiterbildungen sind in den jeweils abhängigen Ansprüchen angegeben.

Ein erfindungsgemäßer Wabenkörper weist Innenwände auf, die Kanäle definieren, die von einer Eintrittsfläche zu einer Austrittsfläche des Wabenkörpers führen. Dabei enthält der Wabenkörper zumindest in einem Teilbereich mehrere von Innenwänden freie Kavernen, die so geformt und dimensioniert sind, dass sie jeweils mindestens einen kugelförmigen Freiraum beinhalten, dessen größte Querschnittsfläche mindestens das Zehnfache der durchschnittlichen Querschnittsfläche der Kanäle in dem betreffenden Teilbereich beträgt.

Es hat sich gezeigt, dass Wabenkörper mit zahlreichen Löchern in ihren Innenwänden zwar einen guten Ausgleich von Druckunterschieden zwischen den einzelnen Kanälen ermöglichen, dass sich aber trotzdem geradlinige Strömungsfäden ausbilden können, wenn keine großen Druckunterschiede zwischen benachbarten Kanälen bestehen. Kleinere Hohlräume werden von diesen Strömungssträhnen einfach gleichförmig durchströmt, so dass es nicht zu einer besonderen Quervermischung oder erhöhten Umsetzung bzw. Abscheidung von Partikeln kommt. Dies ändert sich, wenn die Löcher in den Innenwänden so angeordnet sind, dass mindestens ein kugelförmiger Freiraum entsteht, dessen größte Querschnittsfläche mindestens das Zehnfache der durchschnittlichen Querschnittsfläche der Kanäle beträgt. Dies bedeutet das mindestens zehn dicht beieinander liegende Kanäle in den Freiraum münden und auf der gegenüberliegenden Seite wieder aus diesem herausführen. Bei einer solchen Größenordnung der Kaverne findet jedenfalls eine große Quervermischung statt, wodurch die gewünschten Prozesse in dem Wabenkörper gefördert werden. Eine notwendige Voraussetzung ist, dass die Querschnittsfläche der die Kaverne bildenden Löcher in den Innenwänden ebenfalls mindestens die zehnfache Größe der durchschnittlichen Kanalquerschnittsfläche haben. In einer vorteilhaften Ausgestaltung der Erfindung, die insbesondere für Wabenkörper mit einer großen Zahl von Kanälen pro Querschnittsfläche von Bedeutung ist, beträgt die größte Querschnittsfläche des kugelförmigen Freiraumes das 20- bis 100-fache, vorzugsweise das 30- bis 50-fache der durchschnittlichen Querschnittsfläche der Kanäle. Es entstehen so im Verhältnis zu den Kanalgrößen riesige Kavernen, in denen sich insbesondere bei einem pulsierenden Gasstrom Verwirbelungen und Querströmungen ausbilden können, was ohne zu großen Druckverlust zu besseren Umsetzungseigenschaften führen kann.

Tatsächlich ist es vorteilhaft, wenn eine große Zahl von Kanälen, beispielsweise 10 bis 500 in eine Kaverne münden und aus dieser wieder herausführen.

Damit die günstigen Eigenschaften der erfindungsgemäßen Kavernen sich auf einen möglichst großen Teil der Strömung in einem Wabekörper auswirken können, sollten 50 bis 100 % der Kanäle des Wabenkörpers mindestens eine, vorzugsweise mehr als drei der Kavernen schneiden. Aus Stabilitätsgründen kann es erforderlich sein, dass die Kavernen in einem Wabenkörper nicht ganz bis zum äußersten Mantel reichen, so dass unter Umständen nicht 100 % aller Kanäle eine Kaverne schneiden. Bevorzugt sollte jedoch ein möglichst großer Anteil der Kanäle eine oder noch besser mehrere der Kavernen schneiden, um deren günstige Eigenschaften auszunutzen.

Dazu ist es vorteilhaft, dass die Kavernen gleichmäßig über das Volumen des Wabenkörpers verteilt sind.

Allerdings bereitet es auch keine Schwierigkeiten und kann je nach den Strömungsverhältnissen in einem Abgasreinigungssystem von Vorteil sein, eine ungleichmäßige Verteilung vorzusehen, vorzugsweise mit einer Häufung in einem inneren Bereich und/oder in Richtung zur Eintritts- oder Austrittsfläche des Wabenkörpers. Hier bietet sich die Möglichkeit, die Erfindung an verschiedene Anwendungsfälle anzupassen.

Je nach Art der Einbringung der Kavernen in einen Wabenkörper sind die Kavernen selbst natürlich nicht kugelförmig. Der kugelförmige Hohlraum dient lediglich zur theoretischen Beschreibung der Dimensionsverhältnisse in einer Kaverne. Tatsächlich auftretende Kavernen haben eher die Form von Zylindern oder von gebogenen Zylindern, wobei vorzugsweise ihre axiale Ausdehnung in etwa senkrecht zum Verlauf der Kanäle liegt.

Die bisherige Beschreibung der Erfindung ist nicht auf Wabenkörper aus Blechlagen beschränkt, sondern kann auch auf keramische Wabenkörper Anwendung finden, sofern geeignete Verfahren zur Erzeugung der Kavernen angewendet werden. Bei der Herstellung von keramischen Wabenkörpern kann man beispielsweise die Rohlinge vor dem Brennen relativ leicht bearbeiten und durch Ausstechen oder Maßnahmen schon beim Extrudieren Kavernen erzeugen.

Speziell auf Wabenkörper, die aus Blechen gewickelt, geschlungen und/oder geschichtet sind, ist der unabhängige Anspruch 8 gerichtet. Ein solcher Wabenkörper weist eine Vielzahl von zumindest teilweise strukturierten Blechlagen auf, deren Strukturierung Kanäle bildet, die von einer Eintrittsfläche zu einer Austrittsfläche des Wabenkörpers führen. Mit Blechlagen sind die aufeinander folgenden Schichten des Wabenkörpers gemeint, unabhängig davon, ob diese Blechlagen aus einem oder mehreren getrennten Blechen bestehen. Es sei darauf hingewiesen, dass es grundsätzlich möglich ist, einen Wabenkörper aus nur einem einzigen Blech aufzubauen, indem ein Teil des Blechstreifens gewellt und der verbleibende glatte Teil des Blechstreifens durch Knicken auf diesen gefaltet wird. Das so entstehende Gebilde kann von der Knicklinie aus spiralig zu einem Wabenkörper aufgewickelt werden. Die nächste Möglichkeit ist, ein glattes und ein gewelltes Blech zur Herstellung eines spiralförmig gewickelten Wabenkörpers zu verwenden. Auch mehrgängige Spiralen aus drei oder mehr Blechen sind möglich. Schließlich gibt es eine große Zahl von Bauformen, die aus einem oder mehreren Stapeln von abwechselnden glatten und gewellten Blechen hergesellt werden. Solche Wabenkörper enthalten eine Vielzahl von Blechen, wobei aber die Zahl der Bleche und die Zahl der aufeinander liegenden Blechlagen auch nicht notwendigerweise gleich sein müssen. Aus diesem Grunde ist prinzipiell zwischen einem Blech und einer Blechlage zu unterscheiden, auch wenn dies beispielsweise in Zeichnungen, die nur einen Ausschnitt eines Wabenkörpers zeigen, oft nicht möglich ist. Für die vorliegende Erfindung spielt die Bauform in erster Näherung keine Rolle, wobei es leichter ist, für spiralförmig aufgebaute Wabenkörper die Lage der Löcher zur Bildung von Kavernen zu berechnen als für aus vielen einzelnen Blechen aufgebaute Wabenkörper. Ein prinzipielles Problem besteht aber für keine der Bauform. Ein erfindungsgemäßer Wabenkörper ist dadurch gekennzeichnet, dass zumindest in einem Teilbereich des Wabenkörpers die Blechlagen Löcher aufweisen mit einer effektiven Querschnittsfläche die größer als das Zehnfache der durchschnittlichen Querschnittsfläche der Kanäle in dem betreffenden Teilbereich ist, wobei die Löcher so angeordnet und geformt sind, dass sie im Wabenkörper mit Löchern benachbarter Blechlagen zusammenhängende, großräumige Kavernen bilden, in dem Löcher in zumindest fünf aufeinander folgenden Blechlagen miteinander überlappen, wobei die Überlappungsfläche der betreffenden Löcher in allen diesen fünf Blechlagen mindestens das Zehnfache der durchschnittlichen Querschnittsfläche der Kanäle in dem Teilbereich beträgt. Wie anhand der Zeichnung noch näher erläutert wird, entstehen in Wabenkörpern aus gelochten Blechlagen immer irgendwelche Kavernen, wobei im Extremfall sogar alle Kavernen miteinander in Verbindung stehen können, was immer dann auftritt, wenn die Fläche der Löcher in jeder Blechlage größer ist als die verbleibende Fläche der Blechlage. Bei gewellten Blechlagen wird der Begriff der effektiven Fläche verwendet, der sich durch Projektion des Loches in einer Blechlage auf die Mittelebene der gewellten Blechlage ergibt.

Für die vorliegende Erfindung wesentlich ist es, dass die Löcher nicht kleine verästelte Hohlräume in dem Wabenkörper bilden, sondern verhältnismäßig großvolumige Kavernen, was genau dann eintritt, wenn Löcher in benachbarten Blechlagen nahezu miteinander fluchten, beziehungsweise sich großflächig überlappen. Die erfindungsgemäße Anordnung führt wiederum zu Kavernen mit den gewünschten Eigenschaften. Die Form der Löcher ist grundsätzlich frei wählbar, jedoch empfiehlt es sich, aus mechanischen Gründen zur Vermeidung von Rissbildung Löcher mit gerundeten Rändern zu wählen, wobei die Löcher außerdem quer zur Strömungsrichtung jeweils drei oder mehr Kanäle miteinander verbinden sollten. Auch in Strömungsrichtung sollten die Löcher eine gewisse Mindestgröße haben, nämlich mindestens das zweifache, vorzugsweise mehr als das dreifache, des durchschnittlichen hydraulischen Durchmessers der in die Kaverne mündenden Kanäle. Der hydraulische Durchmesser ergibt sich aus der Querschnittsfläche eines Kanals und seiner Querschnittsform und ist außer bei runden Kanälen kleiner als die größte Breite eines Kanals.

In einer bevorzugten Ausführungsform der Erfindung ist der Wabenkörper zylinderförmig und aus einem oder mehreren Stapeln von Blechen gebildet, wobei die Bleche jedes Stapels eine Länge L und eine Breite B aufweisen, wobei L größer B ist, und die Bleche jedes Stapels jeweils viele Löcher aufweisen, deren Abstände in Richtung der Breite B auf allen Blechen eines Stapels im wesentlichen konstant in Richtung der Länge L aber unterschiedlich sind. Genau dies ist bei bekannten Bauformen im Stand der Technik nicht der Fall. Zur Vereinfachung der Fertigung und mangels Kenntnis der Erfindung wurden typischerweise gelochte Bleche über ihre gesamte Länge gleichmäßig mit Löchern versehen, was gerade nicht zu einem erfindungsgemäßen Wabenkörper führen kann, weder beim spiraligen Aufwickeln von Blechlagen noch bei der Herstellung eines Wabenkörpers aus einem oder mehreren Blechstapeln,

Ein anderes bevorzugtes Ausführungsbeispiel der Erfindung ist ein Wabenkörper aus mindestens einem Blech mit einer Länge L und einer Breite B, wobei L größer B ist, wobei der Wabenkörper spiralförmig gewickelt ist und das mindestens eine Blech viele Löcher aufweist, die in Richtung der Breite etwa konstante Abstände haben, in Richtung der Länge aber unterschiedliche Abstände. Das genaue Muster der Löcher hängt von den jeweiligen Anwendungsbedingungen ab. Allen gewickelten Wabenkörpern ist aber gemeinsam, dass sinnvollerweise in Richtung der Breite der verwendeten Bleche etwa konstante Abstände der Löcher erforderlich sind. Auf diese Weise fluchten die Löcher in Strömungsrichtung schon herstellungsbedingt miteinander, ohne dass man auf diese Abstände besonders achten muss. Richtig berechnet werden muss lediglich der Abstand der Löcher in Längsrichtung jedes Bleches. Hierbei kann man beispielsweise durch Auslassen einzelner Löcher in bestimmten Abständen Kavernen gezielt begrenzen oder durch Änderung des Lochmusters beispielsweise im äußeren Bereich eines Wabenkörpers mehr Kavernen pro Umlauf einer Blechlage vorsehen als im Inneren des Wabenkörpers.

Um bestimmte Fertigungstoleranzen auszugleichen, kann es von Vorteil sein, die Löcher als Langlöcher auszugestalten, wobei ihre Ausdehnung quer zur Richtung der Kanäle größer als in Richtung der Kanäle sein sollte.

Erfindungsgemäße Wabenkörper können zusätzlich in ihrem Inneren mit weiteren Strukturen in den Blechen versehen werden. Alle bekannten Maßnahmen zur Beeinflussung der Strömung im Inneren eines Wabenkörpers können additiv zu den hier beschriebenen erfindungsgemäßen Maßnahmen hinzutreten. Auch die Einbindung in ein Gehäuse und beispielsweise die Ausbildung von konischen Bauformen kann gemäß den im Stand der Technik bekannten Maßnahmen erfolgen.

Ein erfindungsgemäßer Wabenkörper eignet sich insbesondere als Teil einer Abgasreinigungsanlage eines Verbrennungsmotors, insbesondere eines Dieselmotors. Generell ist ein bevorzugtes Anwendungsgebiet die Abgasreinigung bei Kraftfahrzeugen.

Die Erfindung und ihre Ausführungsbeispiele werden im folgenden anhand der Zeichnung näher erläutert, und zwar zeigen
- Fig. 1:: schematisch den Aufbau eines erfindungsgemäßen Wabenkörpers aus gelochten Blechlagen und
- Fig. 2:: schematisch einen Querschnitt durch den Bereich einer Kaverne in einem erfindungsgemäßen Wabenkörper.

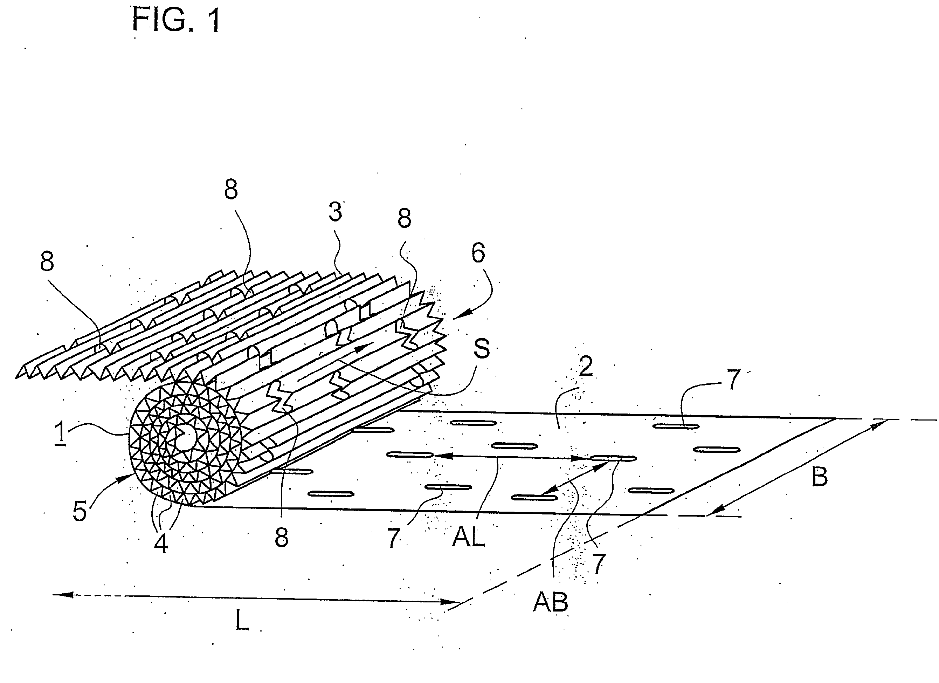

Fig. 1 zeigt einen Wabenkörper 1, der beispielhaft spiralig aus einem glatten Blech 2 und einem gewellten Blech 3 herstellbar ist. Der in der Figur noch nicht fertig hergestellte Wabenkörper 1 weist durch die Struktur des gewellten Bleches 3 gebildete Kanäle 4 auf, die von einer Eintrittsfläche 5 zu einer Austrittsfläche 6 des Wabenkörpers führen. Der Wabenkörper 1 kann in Strömungsrichtung S von einem zu reinigenden Abgas durchströmt werden. Das glatte Blech 2 hat eine Breite B und eine Länge L und ist mit einer großen Anzahl von Löchern 7 versehen. Im vorliegenden Beispiel handelt es sich um Langlöcher mit ihrer längsten Ausdehnung in Richtung der Länge L des glatten Bleches 2, also quer zur späteren Strömungsrichtung S. Auch das gewellte Blech 3 weist zahlreiche Löcher 8 auf, die im vorliegenden Fall ebenfalls als Langlöcher in der gleichen Richtung ausgebildet sind. Man erkennt, dass die Löcher 8 in der gewellten Blechlage 3 bei Streckung der Blechlage deutlich länger sein müssen als die Löcher 7 in dem glatten Blech, damit die Dimensionen der Löcher 8 in dem gewellten Blech 3 in gewelltem Zustand in etwa den Dimensionen der Löcher 7 in dem glatten Blech 2 entsprechen. Für die vorliegende Erfindung ist nur die Projektion der Löcher 8 in dem gewellten Blech 3 auf die Mittelebene des gewellten Bleches 3 von Bedeutung. Die Abstände der Löcher 7, 8 untereinander in Bezug auf die Breite B der Bleche 2, 3 sind im wesentlichen konstant, so dass in dieser Richtung Löcher benachbarter Blechlagen immer praktisch vollständig miteinander überlappen. Man erkennt jedoch, dass bei gleichen Abständen der Löcher 7, 8 untereinander auch in Richtung der Länge L der Bleche 2, 3 sich beim Aufwickeln immer ein Versatz der Löcher mit zunehmendem Durchmesser des zu wickelnden Wabenkörpers 1 ergeben würde. Um große Kavernen mit den erfindungsgemäßen Eigenschaften zu erreichen, muss daher der Abstand der Löcher 7, 8 in Richtung der Länge L der Bleche 2, 3 entsprechend angepasst werden. Am einfachsten ist es, vor der Fertigung festzulegen, wo im Wabenkörper Kavernen welcher Dimensionen sein sollen, und danach zu bestimmen, an welchen Stellen der Bleche 2, 3 wie geformte Löcher anzuordnen sind. Dieser Vorgang mag für unterschiedliche Bauformen von Wabenkörpern unterschiedlich kompliziert sein, ist jedoch durch einfache Versuche und entsprechende Steuerung der Maschinen, die die Löcher 7, 8 erzeugen, problemlos beherrschbar. Die Löcher 7, 8 in Fig. 1 sind nicht unbedingt als maßstäblich gezeichnet anzusehen, so dass sie erfindungsgemäß auch deutlich größer sein könnten.

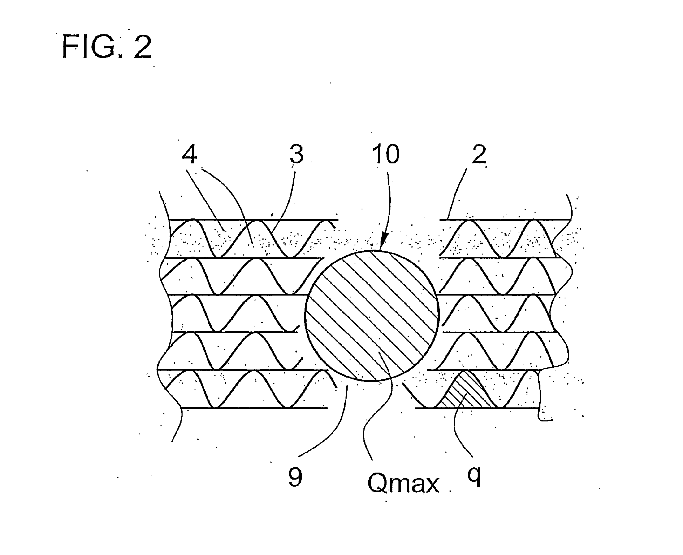

Fig. 2 zeigt schematisch einen Querschnitt durch einen Wabenkörper im Bereich einer erfindungsgemäßen Kaverne 9. Glatte Blechlagen 2 und gewellte Blechgagen 3 sind aufeinander geschichtet, wobei Löcher in den Blechlagen 2, 3 im wesentlichen miteinander überlappen und dadurch eine freie Kaverne 9 bilden. Diese Kaverne 9 enthält einen kugelförmiger Freiraum 10 mit einer maximalen Querschnittsfläche Qmax, in den also theoretisch eine Kugel mit diesem Durchmesser passen würde. Unter der maximalen Querschnittsfläche Qmax einer Kugel wird der größte Querschnitt dieser Kugel verstanden. Wie in der Zeichnung ebenfalls schraffiert angedeutet ist, weist jeder einzelne der Kanäle 4 eine Querschnittsfläche q auf, die im vorliegenden Beispiel für alle Kanäle etwa gleich ist. Es gibt allerdings auch Bauformen von Wabenkörpern, in denen unterschiedliche Kanalquerschnitte vorkommen. In diesem Falle kann man einen durchschnittlichen Kanalquerschnitt q leicht berechnen. Das entscheidende der vorliegenden Erfindung ist, dass die Kavernen 9 so groß und so geformt sind, dass ein kugelförmiger Freiraum 10 hineinpasst, dessen größte Querschnittsfläche Qmax mindestens zehnmal so groß wie der durchschnittliche Kanalquerschnitt q ist. Bevorzugt werden Ausführungsformen, bei denen im Verhältnis noch wesentlich größere kugelförmige Freiräume in die Kavernen 9 passen, insbesondere bei Wabenkörpern mit großen Zelldichten von beispielsweise 600 cpsi (cells per square inch) bis über 1200 cpsi.

Die vorliegende Erfindung ermöglicht eine weitere Verbesserung der Eigenschaften von hoch entwickelten Wabenkörpern für Abgasreinigungssysteme, insbesondere im Hinblick auf die verbesserte Reinigung eines Abgases von Partikeln bei gleichzeitig günstigen Eigenschaften in Bezug auf Druckverlust, Materialeinsatz und Strömungseigenschaften.

### Bezugszeichenliste

- 1: Wabenkörper
- 2: im wesentlichen glatte Blechlage (glattes Blech)
- 3: gewellte Blechlage (gewelltes Blech)
- 4: Kanal
- 5: Eintrittsfläche
- 6: Austrittsfläche
- 7: Loch im glatten Blech
- 8: Loch im gewellten Blech
- 9: Kaverne
- 10: größter kugelförmiger Freiraum

- B: Breite eines Bleches
- L: Länge eines Bleches
- AB: Abstand der Löcher in Richtung der Breite B
- AL: Abstand der Löcher in Richtung der Länge L
- S: Strömungsrichtung
- Qmax: größte Querschnittsfläche
- q: durchschnittliche Kanalquerschnittsfläche

## Patentansprüche

1. Wabenkörper, (1), insbesondere zur Reinigung von Abgas einer Verbrennungskraftmaschine, mit Innenwänden (2, 3), die Kanäle (4) definieren, die von einer Eintrittsfläche (5) zu einer Austrittsfläche (6) des Wabenkörpers (1) führen, **dadurch gekennzeichnet, dass** zumindest in einem Teilbereich des Wabenkörpers (1) mehrere von Innenwänden (2, 3) freie Kavernen (9) vorhanden sind, die so geformt und dimensioniert sind, das sie jeweils mindestens einen kugelförmigen Freiraum (10) beinhalten, dessen größte Querschnittsfläche (Qmax) mindestens das 10-fache der durchschnittlichen Querschnittsfläche (q) der Kanäle (4) in dem betreffenden Teilbereich (T) beträgt.

2. Wabenkörper (1) nach Anspruch 1, **dadurch gekennzeichnet, dass** die größte Querschnittsfläche (Qmax) des kugelförmigen Freiraumes (10) das 20- bis 100-fache, vorzugsweise das 30- bis 50-fache, der durchschnittlichen Querschnittsfläche (q) der Kanäle (4) beträgt.

3. Wabenkörper (1) nach Anspruch 1 oder 2, **dadurch gekennzeichnet, dass** die Kavernen (9) je 10 bis 500 Kanäle (4) schneiden.

4. Wabenkörper (1) nach einem der vorhergehenden Ansprüche, **dadurch gekennzeichnet, dass** 50 bis 100 % der Kanäle (4) des Wabenkörpers (1), vorzugsweise mindestens eine, vorzugsweise mehr als drei, der Kavernen (9) schneiden.

5. Wabenkörper (1) nach einem der vorhergehenden Ansprüche, **dadurch gekennzeichnet, dass** die Kavernen (9) gleichmäßig über das Volumen des Wabenkörpers verteilt sind.

6. Wabenkörper (1) nach einem der Ansprüche 1 bis 4, **dadurch gekennzeichnet, dass** die Kavernen (9) ungleichmäßig im Wabenkörper (1) verteilt sind, vorzugsweise mit einer Häufung in einem inneren Bereich und/oder in Richtung zur Eintritts- (5) oder Austrittsfläche (6) des Wabenkörpers (1).

7. Wabenkörper (1) nach einem der vorhergehenden Ansprüche, **dadurch gekennzeichnet, dass** die Kavernen (9) etwa die Form von Zylindern oder von gebogenen Zylindern aufweisen, vorzugsweise mit ihrer axialen Ausdehnung in etwa senkrecht zum Verlauf der Kanäle (4).

8. Wabenkörper (1), gewickelt, geschlungen und/oder geschichtet aus mindestens einem Blech (2, 3), mit einer Vielzahl von zumindest teilweise strukturierten Blechlagen (3), deren Strukturierung Kanäle (4) bildet, die von einer Eintrittsfläche (5) zu einer Austrittsfläche (6) des Wabenkörpers (1) führen, **dadurch gekennzeichnet, dass** zumindest in einem Teilbereich des Wabenkörpers (1) die Blechlagen (2, 3) Löcher (7, 8) aufweisen mit einer effektiven Querschnittsfläche, die größer als das 10-fache der durchschnittlichen Querschnittsfläche (q) der Kanäle (4) in dem betreffenden Teilbereich ist, wobei die Löcher (7, 8) so angeordnet und geformt sind, dass sie im Wabenkörper (1) mit Löchern (7, 8) benachbarter Blechlagen (2, 3) zusammenhängende, großräumige Kavernen (9) bilden, indem Löcher in zumindest 5 aufeinander folgenden Blechlagen (2, 3) miteinander überlappen, wobei die Überlappungsfläche der betreffenden Löcher (7, 8) in allen diesen 5 Blechlagen (2, 3) mindestens das 10-fache der durchschnittlichen Querschnittsfläche (q) der Kanäle (4) in dem Teilbereich (T) beträgt und wobei die Ausdehnung der Löcher (7, 8) in Strömungsrichtung (S) mindestens das zweifache, vorzugsweise mehr als das dreifache, des durchschnittlichen hydraulischen Durchmessers der in die Kaverne mündenden Kanäle (4) beträgt.

9. Wabenkörper (1) nach einem der vorhergehenden Ansprüche, **dadurch gekennzeichnet, dass** der Wabenkörper (1) zylinderförmig ist und aus einem oder mehreren Stapeln von Blechen gebildet ist, wobei die Bleche jedes Stapels eine Länge (L) und eine Breite (B) aufweisen, wobei L > B ist, und die Bleche jedes Stapels jeweils viele Löcher (7, 8) aufweisen, deren Abstände (AB, AL) in Richtung der Breite (B) auf allen Blechen eines Stapels im wesentlichen konstant, in Richtung der Länge (L) aber unterschiedlich sind.

10. Wabenkörper (1) nach einem der Ansprüche 1 bis 8, **dadurch gekennzeichnet, dass** der Wabenkörper (1) aus mindestens einem Blech (2, 3) mit einer Länge (L) und einer Breite (B), wobei L > B ist, spiralförmig gewickelt ist, wobei das mindestens eine Blech (2, 3) viele Löcher (7, 8) aufweist, die in Richtung der Breite (B) etwa konstante Abstände (AB) haben, in Richtung der Länge (L) aber unterschiedliche Abstände (AL).

11. Wabenkörper (1) nach einem der Ansprüche 8 bis 10, **dadurch gekennzeichnet, dass** zumindest ein Teil der Löcher (7, 8) in Richtung der Kanäle (4) eine geringere Ausdehnung hat als quer zur Richtung der Kanäle (4), wobei die Löcher (7, 8) vorzugsweise Langlöcher sind.

12. Wabenkörper (1) nach einem der vorhergehenden Ansprüche, **dadurch gekennzeichnet, dass** er Teil einer Abgasreinigungsanlage eines Verbrennungsmotors, insbesondere eines Dieselmotors, ist und zum Entfernen von Rußpartikeln aus dem Abgas des Verbrennungsmotors beiträgt.

13. Wabenkörper (1) nach einem der vorhergehenden Ansprüche, **dadurch gekennzeichnet, dass** er zusätzliche Öffnungen und/oder Verwirbelungsstrukturen in den Kanälen (4) aufweist.

## Claims

1. A honeycomb body (1), in particular for purifying exhaust gas from an internal combustion engine, having inner walls (2, 3) which define passages (4) which lead from an entry surface (5) to an exit surface (6) of the honeycomb body (1), **characterized in that** at least in a subregion of the honeycomb body (1) there is a plurality of cavities (9) which are free of inner walls (2, 3) and are shaped and dimensioned in such a way that they each contain at least one spherical free space (10) with a largest cross-sectional area (Qmax) which amounts to at least 10 times the mean cross-sectional area (q) of the passages (4) in the respective subregion (T).

2. The honeycomb body (1) as claimed in claim 1, **characterized in that** the largest cross-sectional area (Qmax) of the spherical free space (10) amounts to 20 to 100 times, preferably 30 to 50 times, the mean cross-sectional area (q) of the passages (4).

3. The honeycomb body (1) as claimed in claim 1 or 2, **characterized in that** the cavities (9) each intersect from 10 to 500 passages (4).

4. The honeycomb body (1) as claimed in one of the preceding claims, **characterized in that** from 50 to 100% of the passages (4) of the honeycomb body (1) preferably intersect at least one, preferably more than three, of the cavities (9).

5. The honeycomb body (1) as claimed in one of the preceding claims, **characterized in that** the cavities (9) are distributed uniformly over the volume of the honeycomb body.

6. The honeycomb body (1) as claimed in one of claims 1 to 4, **characterized in that** the cavities (9) are distributed nonuniformly within the honeycomb body (1), preferably with an accumulation in an inner region and/or in the direction towards the entry surface (5) or exit surface (6) of the honeycomb body (1).

7. The honeycomb body (1) as claimed in one of the preceding claims, **characterized in that** the cavities (9) are approximately in the form of cylinders or curved cylinders, preferably with their axial extent approximately perpendicular to the profile of the passages (4).

8. A honeycomb body (1) which is wound, twisted and/or layered from at least one metal sheet (2, 3) and has a multiplicity of at least partially structured sheet-metal layers (3), whose structuring forms passages (4) which lead from an entry surface (5) to an exit surface (6) of the honeycomb body (1), **characterized in that** at least in a subregion of the honeycomb body (1) the sheet-metal layers (2, 3) have holes (7, 8) with an effective cross-sectional area which is greater than 10 times the mean cross-sectional area (q) of the passages (4) in the respective subregion, the holes (7, 8) being arranged and shaped in such a way that in the honeycomb body (1) they form, together with holes (7, 8) of adjacent sheet-metal layers (2, 3), connected, large-volume cavities (9) as a result of holes in at least 5 successive sheet-metal layers (2, 3) overlapping one another, the overlap area of the respective holes (7, 8) in all these 5 sheet-metal layers (2, 3) being at least 10 times the mean cross-sectional area (q) of the passages (4) in the subregion (T), and the extent of the holes (7, 8) in the direction of flow (S) amounting to at least double, preferably more than triple, the mean hydraulic diameter of the passages (4) which open out into the cavity.

9. The honeycomb body (1) as claimed in one of the preceding claims, **characterized in that** the honeycomb body (1) is cylindrical and is formed from one or more stacks of metal sheets, the metal sheets of each stack having a length (L) and a width (B), where L > B, and the metal sheets of each stack each having a large number of holes (7, 8), whose distances (AB, AL) between each other are substantially constant on all the metal sheets of a stack in the direction of the width (B), but are different in the direction of the length (L).

10. The honeycomb body (1) as claimed in one of claims 1 to 8, **characterized in that** the honeycomb body (1) is wound spirally from at least one metal sheet (2, 3) of a length (L) and a width (B), where L > B, the at least one metal sheet (2, 3) having a large number of holes (7, 8) which have approximately constant distances (AB) between them in the direction of the width (B) but have different distances (AL) between them in the direction of the length (L).

11. The honeycomb body (1) as claimed in one of claims 8 to 10, **characterized in that** at least some of the holes (7, 8) have a smaller extent in the direction of the passages (4) than transversely to the direction of the passages (4), the holes (7, 8) preferably being elongate slots.

12. The honeycomb body (1) as claimed in one of the preceding claims, **characterized in that** it is part of an exhaust-gas purification system of an internal combustion engine, in particular a diesel engine, and contributes to the removal of particulates from the exhaust gas from the internal combustion engine.

13. The honeycomb body (1) as claimed in one of the preceding claims, **characterized in that** it has additional openings and/or swirl structures in the passages (4).

## Revendications

1. Corps en nids d'abeilles (1), notamment pour l'épuration de gaz d'échappement d'une machine à combustion interne, avec des parois intérieures (2,3) qui définissent des canaux (4) qui mènent d'une surface d'entrée (5) jusqu'à une surface de sortie (6) du corps en nids d'abeilles (1), **caractérisé en ce qu'**au moins dans une région partielle du corps en nids d'abeilles (1) il existe une pluralité de cavernes qui sont libérées de parois internes (9) et qui sont formées et dimensionnées de manière telle qu'elles comportent respectivement au moins un espace libre de forme sphérique (10), dont la surface de section la plus grande (Qmax) comporte au moins 10 fois la surface de section moyenne (q) des canaux (4) dans la région partielle (T) respective.

2. Corps en nids d'abeilles (1) selon la revendication 1, **caractérisé en ce que** la surface de section la plus grande (Qmax) de l'espace libre de forme sphérique (10) comporte 20 fois à 100 fois, de préférence 30 fois à 50 fois la surface de section moyenne (q) des canaux (4).

3. Corps en nids d'abeilles (1) selon la revendication 1 ou 2, **caractérisé en ce que** les cavernes (9) coupent respectivement 10 à 500 canaux(4).

4. Corps en nids d'abeilles (1) selon l'une des revendications précédentes, **caractérisé en ce que** 50 à 100 % des canaux (4) du corps en nids d'abeilles (1), coupent de préférence au moins une, de préférence plus de trois, des cavernes (9).

5. Corps en nids d'abeilles (1) selon l'une des revendications précédentes, **caractérisé en ce que** les cavernes (9) sont réparties uniformément sur le volume du corps en nids d'abeilles.

6. Corps en nids d'abeilles (1) selon l'une des revendications 1 à 4, **caractérisé en ce que** les cavernes (9) sont réparties de façon inégale dans le corps en nids d'abeilles (1), de préférence avec une accumulation dans une région interne et/ou en direction de la surface d'entrée (5) ou de sortie (6) du corps en nids d'abeilles (1).

7. Corps en nids d'abeilles (1) selon l'une des revendications précédentes, **caractérisé en ce que** les cavernes (9) ont environ la forme de cylindres ou de cylindres courbés, de préférence avec une extension axiale environ perpendiculaire par rapport au tracé des canaux (4).

8. Corps en nids d'abeilles (1) enroulé, entrelacé et/ou empilé à partir d'au moins une tôle (2, 3), avec une multiplicité de couches de tôles au moins partiellement structurées (3), dont la structuration forme des canaux (4) qui mènent d'une surface d'entrée (5) jusqu'à une surface de sortie (6) du corps en nids d'abeilles (1), **caractérisé en ce qu'**au moins dans une région partielle du corps en nids d'abeilles (1) les couches de tôles (2, 3) ont des trous (7, 8) avec une surface de section effective qui est plus élevée que 10 fois la surface de section moyenne (q) des canaux (4) dans la région partielle respective, les trous (7, 8) étant agencés et formés de manière telle qu'ils forment des cavernes (9) cohérentes à grands espaces dans le corps en nids d'abeilles (1) avec des trous (7, 8) de couches de tôles adjacentes (2, 3) en faisant chevaucher entre eux des trous dans au moins 5 couches de tôles (2, 3) se succédant, la surface de chevauchement des trous (7, 8) respectifs dans toutes ces couches de tôles (2, 3) comportant au moins 10 fois la surface de section moyenne (q) des canaux (4) dans la région partielle (T) et dans quel cas l'extension des trous (7, 8) comporte en direction d'écoulement (S) au moins deux fois, de préférence moins que trois fois le diamètre hydraulique moyen des canaux (4) débouchant dans la caverne.

9. Corps en nids d'abeilles (1) selon l'une des revendications précédentes, **caractérisé en ce que** le corps en nids d'abeilles (1) a une forme cylindrique et est formé à partir d'une pile ou de plusieurs piles de tôles, les tôles de chaque pile ayant une longueur (L) et une largeur (B), dans quel cas L > B et les tôles de chaque pile ont respectivement beaucoup de trous (7, 8), dont les distances (AB, AL) en direction de la largeur (B) sont sensiblement constantes sur toutes les tôles d'une pile, cependant différentes en direction de la longueur (L).

10. Corps en nids d'abeilles (1) selon l'une des revendications 1 à 8, **caractérisé en ce que** le corps en nids d'abeilles (1) est enroulé de façon spiroïdale d'au moins une tôle (2, 3) avec une longueur (L) et une largeur (B), dans quel cas L > B, l'au moins une tôle (2, 3) ayant beaucoup de trous (7, 8), qui en direction de la largeur (B) ont environ des distances (AB) constantes, cependant en direction de la longueur (L) des distances (AL) différentes.

11. Corps en nids d'abeilles (1) selon l'une des revendications 8 à 10, **caractérisé en ce qu'**au moins une partie des trous (7, 8) a en direction des canaux (4) une extension plus faible que transversalement à la direction des canaux (4), les trous (7, 8) étant de préférence des trous oblongs.

12. Corps en nids d'abeilles (1) selon l'une des revendications précédentes, **caractérisé en ce qu'**il fait partie d'une installation d'épuration de gaz d'échappement d'un moteur à combustion interne, notamment d'un moteur diesel et contribue à enlever les particules de suie d'un gaz d'échappement du moteur à combustion interne.

13. Corps en nids d'abeilles (1) selon l'une des revendications précédentes, **caractérisé en ce qu'**il a des ouvertures supplémentaires et/ou des structures de tourbillonnement dans les canaux (4).
